(19) Europäisches Patentamt
European Patent Office
Office européen des brevets

(11) EP 0 435 646 B1

(12) **EUROPEAN PATENT SPECIFICATION**

(45) Date of publication and mention
of the grant of the patent:
**25.09.1996 Bulletin 1996/39**

(51) Int Cl.6: **G11B 19/20**, G11B 21/08,
G11B 7/085

(21) Application number: **90314233.9**

(22) Date of filing: **24.12.1990**

(54) **Target track position retrieval device**

Zielspur-Positionswiedergabeeinrichtung

Dispositif pour retrouver la position d'une piste cible

(84) Designated Contracting States:
**DE FR GB NL**

(30) Priority: **28.12.1989 JP 341829/89**

(43) Date of publication of application:
**03.07.1991 Bulletin 1991/27**

(73) Proprietor: **SONY CORPORATION**
**Tokyo (JP)**

(72) Inventor: **Kitani, Satoshi, c/o Sony Corporation**
**Shinagawa-ku, Tokyo (JP)**

(74) Representative: **Ayers, Martyn Lewis Stanley et al**
**J.A. KEMP & CO.**
**14 South Square**
**Gray's Inn**
**London WC1R 5LX (GB)**

(56) References cited:
**EP-A- 0 123 946**          **WO-A-86/05310**

- **PATENT ABSTRACTS OF JAPAN vol. 11, no. 118
(P-567)14 April 1987 & JP-A-61 264 567**
- **PATENT ABSTRACTS OF JAPAN vol. 8, no. 141
(P-283)30 June 1984 & JP-A-59 038 972**
- **PATENT ABSTRACTS OF JAPAN vol. 12, no. 383
(P-770)13 October 1988 & JP-A-63 127 463**
- **PATENT ABSTRACTS OF JAPAN vol. 11, no. 91
(P-558)23 March 1987 & JP-A-61 242 381**

## Description

This invention relates to a disc recording and/or reproducing apparatus having a target track position retrieval device for retrieving a target track position on a rotary disc, and is applied to, for example, a disc recording/playback apparatus for rotating a rotary disc in the state of CLV (Constant Linear Velocity) to carry out recording or playback of signals.

Hitherto, in disc recording/playback apparatus adapted to rotate a rotary disc under the state where a linear velocity is constant to carry out recording or playback of signals, for example, as in a display playback apparatus disclosed in the Japanese Patent Publication No. 50035/89, or a track position retrieval device disclosed in the Japanese Patent Publication No. 50030/89, an approach is employed to calculate the number of tracks from a present track up to a target track by a playback time from the present track up to the target track, thus to retrieve a target track position.

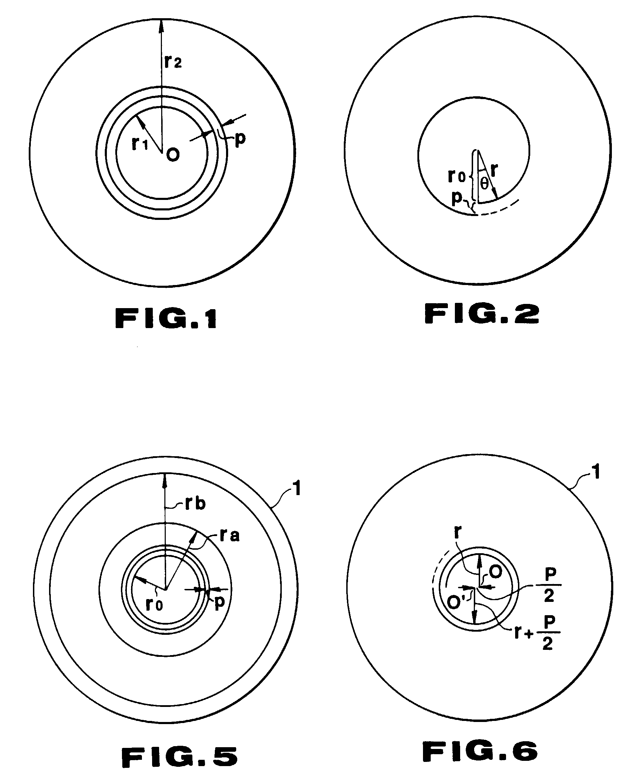

Namely, in the disc playback apparatus disclosed in the Japanese Patent Publication No. 50035/89, as shown in FIG. 1 with respect to a concentrical track having a track pitch [p], a radius [$r_2$] of a track located in a playback time [t] from a track of a radius [$r_1$] when a linear velocity of the disc is represented by [v] is determined by the following equation (1):

$$r_2 = \sqrt{\frac{Vp}{\pi} t + r_1{}^2} \tag{1}.$$

Further, the number of tracks [n] from the track of the radius [$r_1$] up to the track of the radius [$r_2$] is determined by the equation (2):

$$n = \frac{r_2 - r_1}{P} \tag{2}.$$

In a manner stated above, retrieval of the target track position is carried out.

In the case of the target track position retrieval device disclosed in the Japanese Patent Publication No. 50030/89, in a target track position retrieval device comprising signal playback means for playing back signals from information tracks recorded on a rotary disc rotationally driven under the state where a linear velocity is constant, movement means for moving the playback means in a direction traversing information tracks on the rotary disc, counter means for counting how many number of times the playback means traverses information tracks from a playback output from the moving playback means, and control means for making a comparison between given target position information which should indicate a target track position and a count value by the counter means to stop movement of the playback means by the movement means when the given target position information and the count value are in correspondence with each other, as shown in FIG. 2, when it is assumed that an inner most circumferential track radius, the number of rotations at the time of playing back the innermost circumferential track, and a track pitch are represented by [$r_0$], [$N_0$] per second, and [p], respectively, a playback track radius [r] at the time [t] is determined by the equation (3):

$$r = \sqrt{r_0{}^2 + pN_0 \cdot t(p + 2r_0)} \tag{3}$$

Further, the number of tracks [$M_{0-1}$] from a present track position up to a target track position is determined by the following equation (4):

$$M_{0-1} = \frac{1}{p} \left\{ \sqrt{r_0{}^2 + pN_0 \cdot t_1(p+2r_0)} - \sqrt{r_0{}^2 + pN_0 \cdot t_0(p+2r_0)} \right\} / P \quad \ldots\ldots (4)$$

In this way, retrieval of the target track position is carried out. Further, at the target track position, the number of rotations [N] of the disc at the target track position is determined by the following equation (5):

$$N = N_0 \frac{\sqrt{r_0{}^2 + pN_0 \cdot t_1(p+2r_0)}}{r_0} \tag{5}$$

Thus, by controlling in advance a disc rotational velocity, a high speed retrieval at the target track position can be made.

Meanwhile, in conventional target track position retrieval apparatuses as described above, subduplicate processing and multiplicative processing are required for calculating the number of tracks from a present track position up to a target track position, or the number of disc rotations at a target track position. Accordingly, when an attempt is made to realize a high speed retrieval at a target track position by a low cost computational processing device, such a computation time constitutes an obstacle.

Further, there is conceivable a method of storing, into ROM, a data table in which the number of tracks up to a target track position or the number of disc rotations at a target track position at predetermined playback time moments is calculated in advance. However, in accordance with the standard requirements of, e.g., so called a compact disc, the linear velocity [$v_0$] is limited to 1.2 to 1.4 [m/s], and the track pitch [p] is limited to $1.5 \times 10^{-6}$ to $1.7 \times 10^{-6}$[m]. Namely, the linear velocity [$v_0$] and the track pitch [p] are set in an allowed ranges every discs. Accordingly, data table is required in correspondence with a plurality of linear velocities [$v_0$] or the track pitch [p]. For this reason, it is difficult to use a data table having a high track accuracy because of restriction by the ROM capacity,

WO 86/05310 discloses an apparatus for determining the linear velocity V. of a disc by detecting the frequency of oscillations of a radial error signal.

JP-A-61-264567 discloses an apparatus in which track jumping is carried out on the basis of information obtained by sampling the angular velocity necessary for reading the disc at different positions.

With the problems with the prior art as described above in view, an object of this invention is to provide a disc recording and/or reproducing apparatus having a device for retrieving a target track position on a rotary disc comprising signal playback means for playing back signals from information tracks recorded on a rotary disc rotationally driven under the state where a linear velocity is constant, movement means for moving the playback means in a direction traversing information tracks on the rotary disc, counter means for detecting, from a playback output from the moving playback means, how many number of times the playback means traverses information tracks to count them, and control means for making a comparison between given target position information which should indicate a target track position and a count value by the counter means to stop movement of the playback means by the movement means when the given target position information and the count value by the counter means are in correspondence with each other, thus permitting a high speed retrieval at a target track position by a low cost computational processing device.

To achieve the above-described object, this invention is directed to a disc recording and/or reproducing apparatus having a target track position retrieval device comprising signal playback means for playing back signals from information tracks recorded on a rotary disc rotationally driven under the state where a linear velocity is constant, movement means for moving the playback means in a direction traversing the information tracks on the rotary disc, counter means for detecting, from a playback output from the moving playback means, how many number of times the playback means traverses the information tracks to count them, and control means for making a comparison between given target position information which should indicate a target track position and a count value by the counter means to stop movement of the playback means by the movement means when the given target position information and the count value are in correspondence with each other,

characterized in that the device comprises:

target position information generator means for determining the number of tracks [M] from a present track position up to a target track position on the basis of the number of tracks [n] in a playback time [$t_n$] calculated by using the following equation No. 6 to deliver it to the control means as the target position information:

$$t_n \doteqdot \frac{2\pi}{v_0} \sum_{i=1}^{n} (r_0 + i_p) \qquad \ldots\ldots (6)$$

where a linear velocity, a track pitch and the radius of a reference track are represented by [$v_0$], [p] and [$r_0$], respectively, and how many number of times the playback means transverses the information tracks until the playback time [$t_n$] from the reference track is represented by [n], and

velocity control means for controlling a rotational velocity of the rotary disc using, as disc rotational velocity information, a time [$\Delta t_n$] required for one rotation of the disc in the target track calculated from the number of tracks [n] in the playback time [$t_n$] by using the following equation No. 7:

$$\Delta t_n = \frac{2\pi}{V_0} (r_0 + np) \tag{7}$$

In a target track position retrieval device of the apparatus according to this invention, the target position information generator means determines the number of tracks [M] from a present track position up to a target track position on the basis of the number of tracks [n] from a reference track position up to a playback time [$t_n$] calculated by using the above-mentioned equation No. 6 to deliver the number of tracks [M], as target position information, to the control means for stopping, at a target track position the signal playback means for playing back signals from information tracks recorded on the rotary disc. Further, the velocity control means calculates a time [$\Delta t_n$] required for one rotation of the disc at a target track by using the above-mentioned equation No. 7 on the basis of the number of tracks [n] in the playback time [$t_n$] calculated by using the above-mentioned equation No. 6 to control a rotational velocity of the rotary disc as disc rotation velocity information.

FIG. 1 is a plan view of a disc used for explanation of a conventional target track position retrieval device, and FIG. 2 is a plan view of a disc used for explanation of another conventional target track position retrieval device.

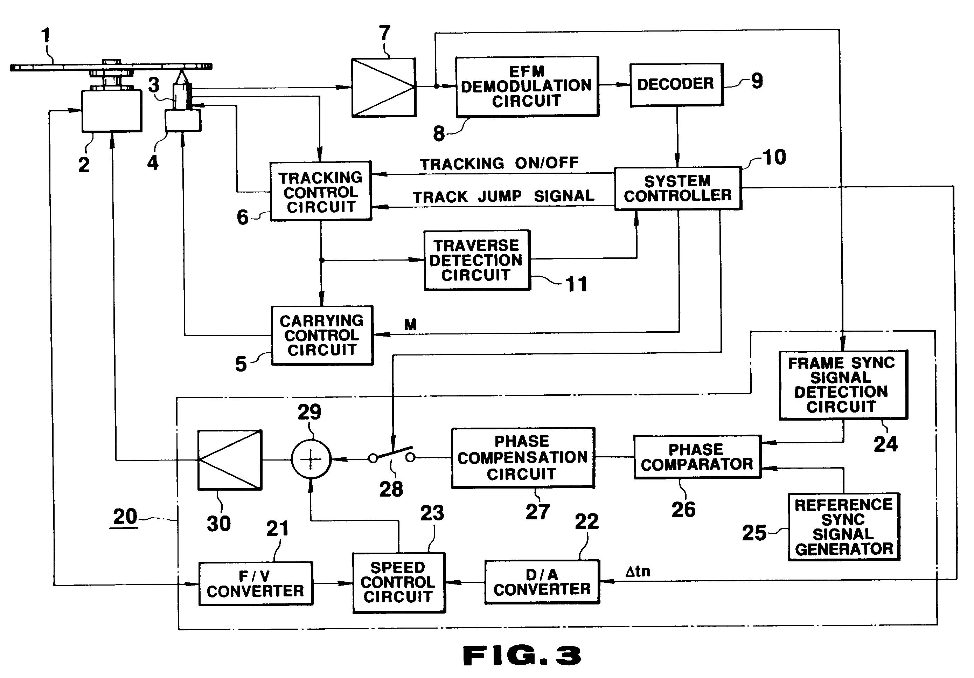

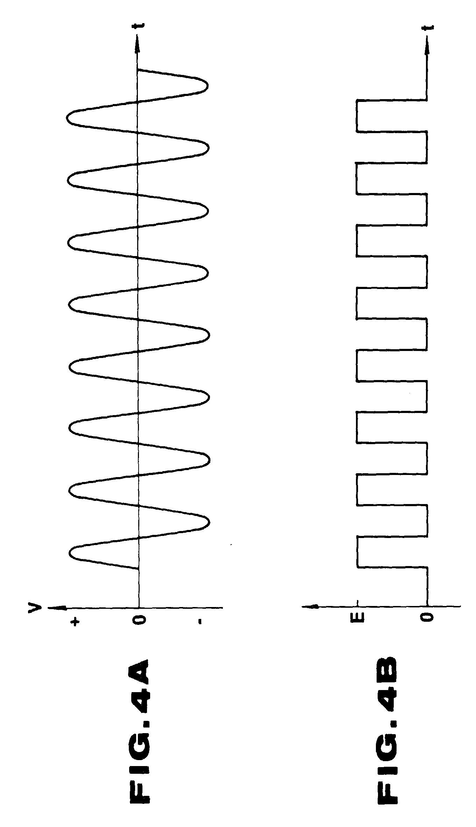

FIG. 3 is a block diagram showing the configuration of a target track position retrieval device according to this invention, FIGS. 4A and 4B are signal waveform diagrams showing an input/output waveform of a traverse detection circuit in the target track position retrieval device shown in FIG. 3, respectively, FIG. 5 is a plan view showing an approximation model in the form of concentric circles of information tracks of an optical disc used for the target position retrieval device shown in FIG. 3, and FIG. 6 is a plan view showing an approximation in FIG. 3, and FIG. 6 is a plan view showing an approximation model in a helical form of information tracks of an optical disc used for the target track position retrieval device shown in FIG. 3.

An embodiment of a target track position retrieval device of the apparatus according to this invention will now be described in detail with reference to the attached drawings.

FIG. 3 shows the configuration of a target track position retrieval device in the case where this invention is applied to an optical disc player.

In this device, a disc (1) is a compact disc having a constant linear velocity in which audio data obtained by digitalizing music signals are recorded on information tracks. This disc (1) is rotationally driven by a spindle motor (2). On the disc (1), control data such as music number information, music performance time information, and/or absolute performance time information from the start position of the information track are multiplexed with the above-mentioned audio data, and are recorded together with a frame SYNC signal every each frame.

The spindle motor (2) is controlled by a motor control circuit (20) which will be described later.

The target track position retrieval device of this embodiment comprises an optical pickup (3) adapted to irradiate a laser light to the disc (1) to detect a reflected light thereof to convert it to an electric signal, thus to play back signals from information tracks of the disc (1).

The optical pickup (3) is mounted on a carriage (4). This carriage 4 is driven and controlled by a carrying control circuit (5), and is moved in a direction traversing the information tracks, i .e., in a radial direction of the disc (1). Further, the carrying control circuit (5) carries out a movement control in the disc radial direction of the optical pickup (3) by the carriage (4) in dependency upon a control signal from a system controller (10).

In addition, a tracking servo by a tracking control circuit (6) or a focusing servo by a focusing control circuit (not shown) is applied to the optical pickup (3).

A playback signal provided by detecting a reflected light by the optical disc (1) with the optical pickup (3) is delivered to the tracking control circuit (6) or the focusing control circuit (not shown), and is delivered to an EFM demodulation circuit (8) and the motor control circuit (20) through a playback amplifier (7).

An ON/OFF control signal and a track jump control signal for the tracking control are delivered from the system controller (10) to the tracking control circuit (6). At the time of playback operational mode, this tracking control circuit (6) carries out a tracking control based on a playback signal from the optical pickup (3) so that the optical pickup (3) precisely scans information tracks of the optical disc (1) with light spots by a laser light. On the other hand, at the time of the retrieval operational mode, this tracking control circuit (6) is adapted so that the tracking control is released by an ON/OFF control signal from the system controller (10) for a time period during which a present track position of the optical pickup (3) becomes close to a track position away from the target track position by a predetermined number of tracks so as to permit a high speed carrying by the carrying control circuit (5) of the optical pickup (3). Thus, when the optical pickup (3) becomes close to a track position away from the target track position by a predetermined number of tracks, the tracking control is initiated by an ON/OFF control signal from the system controller (10), and the track jump control for moving a light spot of the optical disc (1) up to the target track in accordance with a track jump signal from the system controller (10) is carried out. Further, at the time of the retrieval operational mode, the tracking control (6) delivers, to the carrying control circuit (5) and a traverse detection circuit (11), a traverse signal in the form of a sine wave as shown in FIG. 4A formed on the basis of a playback signal from the optical pickup (3) resulting from the fact that a light spot of the optical pickup (3) traverses information tracks of the optical disc (1).

The traverse detection circuit (11) implements waveform shaping to the traverse signal in the form of sine wave to thereby form a traverse detection pulse in the form of a rectangular wave as shown in FIG. 4B having the number of rising edges corresponding to how many number of times a light spot of the optical pickup (3) traverses information tracks. A traverse detection pulse outputted from this traverse detection circuit (11) is delivered to the system controller (10).

The EFM demodulation circuit (8) implements demodulation processing of an EFM (Eight Fourteen Modulation) code pursuant to the compact disc standard requirements to a playback signal by the optical pickup (3) delivered through the playback amplifier (7) to deliver a demodulated output to a decoder (9). This decoder (9) implements decode processing such as descramble or error correction, etc. to the demodulated output by the EFM demodulation circuit (8) to thereby play back, every frame, audio data and control data recorded on the information tracks of the optical disc (1). The control data provided from the decoder (9) is delivered to the system controller (10), and the playback audio data is delivered to an audio data processing system (not shown).

Further, the motor control circuit (20) is composed of a speed (velocity) control system and a phase control system.

The speed control system of this motor control circuit (20) comprises a frequency/voltage (F/V) converter (21) supplied with a frequency signal proportional to a rotational speed of the spindle motor (2) generated by a frequency generator (not shown) affixed to the spindle motor (2), a digital/analog (D/A) converter (22) supplied with target speed [$\Delta t_n$] data from the system controller (10), and a speed control circuit (23) supplied with converted outputs by respective converters (21), (22). The F/V converter (21) converts a frequency signal from the frequency generator, which is proportional to a present rotational speed of the spindle motor (2), to a voltage signal to deliver it to the speed control circuit (23). Further, the D/A converter (22) changes target speed [$\Delta t_n$] data delivered from the system controller (10) to corresponding analog data to deliver a voltage signal indicative of the target speed [$\Delta t_n$] to the speed control circuit (23). Thus, the speed control circuit (23) compares a present rotational speed of the spindle motor (2), which is indicated by the voltage signal from the F/V converter (21), with the target speed [$\Delta t_n$] indicated by the voltage signal from the D/A converter (22) to form a speed control signal for controlling a speed error so that it becomes equal to zero.

The phase control system of the motor control circuit (20) comprises a frame SYNC signal detection circuit (24) supplied with a playback signal by the optical pickup (3) through the playback amplifier (7), a reference SYNC signal generator (25) for generating a reference frame SYNC signal, a phase comparator (26) for carrying out a phase comparison between a frame SYNC signal detected at the frame SYNC signal detection circuit (24) and a reference frame SYNC signal generated at the reference SYNC signal generator (25), and a phase compensation circuit (27) for outputting, as a phase control signal, a compared output by the phase comparator (26).

The motor control circuit (20) further comprises a signal adder (29) supplied with a phase control signal from the phase compensation circuit (27) of the phase control system through a switch (28) subjected to an ON/OFF control by the system controller (10). This signal adder (29) adds the phase control signal to a speed control signal formed at the speed control circuit (23) to deliver, as a motor control signal, an added output to the spindle motor (3) through a power amplifier circuit (30).

In this embodiment, when the playback operational mode is set, the system controller (10) carries out a control operation of the playback operation mode while controlling, every frame, the scanning position of information tracks of the optical disc (1) by the optical pickup (3) on the basis of control data played back every frame by the decoder (9).

On the other hand, when the retrieval operational mode is set, the system controller (10) carries out a control operation of the retrieval operational mode as follows.

Namely, when the retrieval operational mode is set, the system controller (10) takes first thereinto a present playback time [$t_a$] indicated by control data played back every frame by the decoder (9). Then, the system controller (10) takes thereinto playback time [$t_b$] information of a target track given as a control input of the retrieval operational mode by operation input means (not shown).

In this case, the above-mentioned playback times [$t_a$], [$t_b$] information are given as absolute music time information from a start position of information track.

The system controller (10) determines the number of tracks [M] from a present playback track position up to a target track position and a playback time [$\Delta t_n$] required for one rotation at the target track position on the basis of the playback time [$t_a$], [$t_b$] information to deliver, as a carrying control signal, information indicative of the number of tracks [M] to the carrying control circuit (5), and to deliver, as target speed information, the playback time [$\Delta t_n$] information to the D/A converter (22) of the motor control circuit (20).

In the optical disc (1) rotationally driven at a constant linear velocity, where concentrical information tracks are employed as shown in FIG. 5, when it is assumed that a linear velocity, a track pitch, and the radius of a reference track, e.g., an innermost circumferential track are represented by [$v_0$], [$p$] and [$r_0$], respectively, the playback time [$t_n$] can be represented by the following equation No. 8:

$$t_n = \frac{2\pi}{v_0} \sum_{i=1}^{n} (r_0 + i_p) \qquad \ldots \ldots (8)$$

where how many number of times a light spot of the optical pickup (3) traverses information tracks from the reference track up to the playback time [$t_n$] is represented by [$n$]. The number of tracks [$n$] when $t \geq t_a$ holds as the result of the fact that the playback [$t_n$] is calculated by taking the value of n as n=1, n=2 from n=0 provides the number of tracks [$n_a$] from the reference track up to a present track. Similarly, the number of tracks [$n$] when $t \geq t_b$ holds provides the number of tracks [$n_b$] from the reference track up to the target track.

Accordingly, the number of tracks [M] from the present track position up to the target track position can be determined by the equation No. 9

$$M = |n_b - n_a| \qquad\qquad (9)$$

The above-mentioned equation No. 8 indicating the playback time $[t_n]$ can be represented by the recurrence formula expressed as the equation No. 10 or the equation No. 11 suitable for the computational processing by an electronic computer.

$$t(n+1) = \frac{2\pi}{V_0} \{r_0 + (n+1)p\} + t(n) \tag{10}$$

$$t(0) = 0$$

$$t(n+\alpha) = \frac{\pi}{V_0} \{2\alpha pn + (2r_0 + p)\alpha + p\alpha^2\} + t(n) \tag{11}$$

$t(0) = 0$ ($\alpha$ is an integer)

It is to be noted that the equation No. 8 indicating the playback time $[t_n]$ may be transformed into the following equation (12):

$$t_n = 2\pi n \left(2r_0 + P \frac{1+n}{2}\right) \tag{12}$$

Thus, an approach may be employed to calculate the playback time $[t_n]$ by the equation No. 12 to calculate how many number of times [n] a light spot of the optical pickup (3) traverse from the reference tracks up to the playback time $[t_n]$.

Further, the time required for one rotation of the disc $[\Delta t_n]$ at the playback time $[t_n]$ represented by the equation No. 8 can be calculated by the following equation No. 13 from how many number of times a light spot of the optical pickup (3) traverses information tracks from the reference track up to the playback time $[t_n]$:

$$t_n = \frac{2\pi}{V_0} (r_0 + n_p) \tag{13}$$

$$t_{i-n} = \sum_{i=1}^{n} t_i = \frac{2\pi}{V_0} \sum_{i=1}^{n} (r_0 + np) \quad \dots \quad (14)$$

When the equation No. 14 expressed above is rewritten into a recurrence formula suitable for the computational processing by the computer, the following equation No. 15 or 16 described below is provided:

$$t(n+1) = An + B + t(n) \tag{15}$$

$$t(0) = 0$$

$$t(n+\alpha) = Cn + D + t(n) \tag{16}$$

$t(0) = 0$ ($\alpha$ is an integer)

In the above equations, A, B, C and D are constants which can be calculated in advance every disc, respectively. Since [p] and $[v_0]$ have a small variation, even if the above-mentioned constants are stored as a table, the memory area occupied in the ROM is a few.

The time $[\Delta t_n]$ information required for one rotation of the disc, which is calculated by using the above-mentioned equation No. 13, is proportional to the number of rotations [m] of the disc, which indicates a target rotational speed of the disc in the playback time $[t_n]$.

As stated above, the system controller (10) determines the number of tracks [M] from a present track position up to a target track position by the above-mentioned equation No. 10 on the basis of the number of tracks [n] in the playback time $[t_n]$ calculated by using the equation No. 9 indicating a playback time from the reference track, and calculates a time $[\Delta t_n]$ required for one rotation of the disc in the target track by using the equation No. 13.

With the tracking control by the tracking control circuit (6) being released, the system controller (10) first delivers the track number [M] information to the carrying control circuit (5), and delivers the time $[\Delta t_n]$ information to the D/A converter (24) of the motor control circuit (20) as target speed information at a target track.

The carrying control circuit (5) moves the optical pickup (3) mounted on the carriage (4) toward a target track at a high speed in accordance with the track number [M] information delivered from the system controller (10).

At this time, the speed control system of the motor control circuit (20) controls a rotational speed of the optical disc (1) by the spindle motor (2) so that it becomes equal to a rotational speed at a target track in advance using, as target speed information, the time $[\Delta t_n]$ information delivered from the system controller (10) to the D/A converter (24).

The system controller (10) subtracts track number [M] information up to the target track every rising edges of a traverse detection pulse outputted from the traverse detection circuit (11) to deliver it to the carrying control circuit (5) to control a high speed carrying operation of the optical pickup (3) by the carrying control circuit (5). When the track number M information up to the target track becomes equal to a predetermined number of tracks $[M_0]$, the system

controller (10) initiates the tracking control operation of the tracking control circuit (6), and closes the switch (28) of the motor control circuit (20) to initiate the operation of the phase control system. The system controller (10) takes thereinto control data of a present track provided by the decoder (9) to determine, by the equation No. 9, the number of tracks [M] from a present track up to a target track on the basis of the number of tracks n in the playback time $[t_n]$ calculated by using the equation No. 9 to deliver a track jump signal corresponding to the number of tracks [M] to the tracking control circuit (6) to carry out a track jump control operation for moving a light spot of the optical disc (1) up to the target track.

The system controller (10) moves a light spot of the optical disc (1) up to a target track by the track jump control operation. When present playback time information $[t_a]$ indicated by control data on a present track provided from the decoder (9) becomes in correspondence with playback time information $[t_b]$ on a target track given in advance by the above described operating means, the control operation of the retrieval operation mode is completed.

While, in the above-described embodiment, an approach is employed to calculate the number of tracks [M] up to a target track, or a time $[\Delta t_n]$ required for one rotation of the disc in a target track, this invention is not limited only to this embodiment.

For example, as shown in FIG. 6, attention is drawn to a model based on approximation of combination of a semicircle having a radius [r] using the point [o] as a center and a semicircle having a radius [r + p/2] using the point [o'] away from the point [o] by a distance [p/2] with respect to helical or spiral information tracks having a track pitch [p]. The playback time $[t_n]$ from a reference track having a radius $[r_0]$ can be expressed by the following equation No. 17:

$$t_n \fallingdotseq \frac{2\pi}{v_0} \sum_{i=1}^{n} (r_0 + i_p) \qquad \ldots \ldots (17)$$

where how many number of times a light spot of the optical pickup (3) traverses information tracks until the playback time $[t_n]$ is represented by [n]. Thus, it is possible to calculate the number of tracks [M] from a present track position up to a target track position on the basis of the above equation No. 17. Further, a time $[\Delta t_n]$ required for one rotation of the disc on the target track in the playback time $[t_n]$ is expressed as follows:

$$t_n = \frac{2\pi}{v_0} \{(r_0 + np) + \pi p/2\}$$

$$= \frac{2\pi}{v_0} (r_0' + pn) \qquad\qquad (18)$$

$$t_{0-n} = \sum_{i=0}^{n} \Delta t_i$$

$$= \frac{2\pi}{v_0} \sum_{i=1}^{n} \{(r_0 + np) + \pi p/2\}$$

$$= \frac{2\pi}{v_0} \sum_{i=1}^{n} (r_0 + np) \qquad \ldots \ldots (19)$$

$(r_0' = r_0 + \pi p/2)$

Thus, the time $[\Delta t_n]$ can be efficiently calculated using a computer by a recurrence formula in the same form as that of the above-described concentric circle model.

As described above, the target track position retrieval device according to this invention is adapted to determine the number of tracks [M] from a present track position up to a target track position on the basis of the number of tracks [n] in a playback time $[t_n]$ calculated by using the following equation:

$$t_n \fallingdotseq \frac{2\pi}{v_0} \sum_{i=1}^{n} (r_0 + i_p)$$

where a linear velocity, a track pitch and the radius of a reference track of a rotary disc rotationally driven under the state where a linear velocity is constant are represented by $[v_0]$, [p] and $[r_0]$, respectively, and how many number of times the playback means traverses the information tracks is represented by [n], and to calculate a time $[\Delta t_n]$ required

for one rotation of the disc in a target track calculated from the number of tracks [n] in the playback time [$t_n$] by using the following equation:

$$\Delta t_n = \frac{2\pi}{V_0} (r_0 + n_p),$$

to carry out carrying control of the playback means using the track number [M] as the target position information, and to control a rotational speed of the rotary disc using the time [$\Delta t_n$] information as disc rotational speed information, thereby making it possible to carry out a high speed retrieval of the target track position by using a low cost computational processing device.

## Claims

1. A disc recording/reproducing apparatus having a target track position retrieval device comprising signal playback means (3) for playing back signals from information tracks recorded on a disc (1) rotationally driven under the state where a linear velocity is constant, movement means (4) for moving said playback means in a direction traversing said information tracks on said disc, counter means (10, 11) for detecting, from a playback output from the moving playback means, how many number of times said playback means traverses the information tracks to count them, and control means (10) for making a comparison between target position information indicating a target track position and a count value by said counter means to stop movement of said playback means (3) by said movement means (4) when said target position information and said count value are in correspondence with each other,

   characterized in that said device comprises:

   target position information generator means (10) for determining the number of track [M] from a present track position up to a target track position on the basis of the number of track [n] in a playback time [$t_n$] calculated by using the following equation to deliver it to said control means as said target position information:

   $$t_n \fallingdotseq \frac{2\pi}{V_0} \sum_{i=1}^{n} (r_0 + ip)$$

   where a linear velocity, a track pitch and the radius of a reference track are represented by [$v_0$], [p] and [$r_0$], respectively, and how many number of times said playback means traverses the information tracks until said playback time [$t_n$] from said reference track is represented by [n], and

   velocity control means (20) for controlling a rotational velocity of said rotary disc using, as disc rotational velocity information, a time [$\Delta t_n$] required for one rotation of the disc in a target track calculated from the number of tracks [n] in said playback time [$t_n$] by using the following equation:

   $$\Delta t_n = \frac{2\pi}{V_0} (r_0 + np)$$

2. An apparatus as set forth in claim 1, wherein, with respect to a disc (1) including spiral information tracks having a track pitch [p], said velocity control means (20) controls a rotational velocity of said disc using, as disk rotational information, a time [$\Delta t_n$] required for one rotation of the disk in a target track calculated by using the following equation:

   $$\Delta t_n = \frac{2\pi}{V_0} (r_0' + pn)$$

   $(r_0' = r_0 + \pi P/2)$

3. An apparatus as set forth in claim 1, wherein said control means (10) is operative, with tracking control of said signal playback means being released, to deliver said track number [M] information to said movement means (6), and to deliver, as target velocity information in a target track, said time [$\Delta t_n$] to said velocity control means.

4. An apparatus as set forth in claim 3, wherein said velocity control means (20) comprises frame SYNC signal detection means (24) for detecting a frame SYNC signal from said signal playback means, reference frame SYNC signal generator means (25) for generating a reference frame SYNC signal, phase comparison means (26) for carrying out a phase comparison between output signals from said frame SYNC signal detection means and said reference frame SYNC generator means, and phase compensation means (27) for outputting an output from said phase comparison means as a phase control signal, wherein when said target track number [M] information becomes in correspondence with a predetermined number of tracks [$M_0$], tracking control of said signal playback means is initiated by said control means, and wherein said frame SYNC signal detection means (24) and said reference frame SYNC signal generator means (25) of said velocity control means are allowed to carry out a rotational phase control of the disc by said phase comparison means (26) and said phase compensation means (27).

5. An apparatus as set forth in claim 4, wherein said velocity control means comprises switch means (28) subjected to ON/OFF control by said control means (10), and wherein, at the time of moving said signal playback means at a high speed by said movement means, an output signal from said phase compensation means (27) of said velocity control means (20) is interrupted by said switch means.

## Patentansprüche

1. Platten-Aufzeichnungs-/Wiedergabegerät mit einer Vorrichtung zum Wiederauffinden einer Zielspurposition, wobei diese Vorrichtung aufweist:

eine Signalwiedergabeeinrichtung (3) zur Signalwiedergabe von auf einer Platte (1) aufgezeichneten Informationsspuren, wenn die Platte mit konstanter Lineargeschwindigkeit gedreht wird,

eine Bewegungsvorrichtung (4) zum Bewegen der Signalwiedergabeeinrichtung in einer Richtung, in der sie die Informationsspuren auf der Platte überquert,

eine Zähleinrichtung (10, 11), die aus einem Wiedergabe-Ausgangssignal der bewegten Wiedergabeeinrichtung die Zahl ermittelt, wie oft die Wiedergabeeinrichtung die Informationsspuren überquert, um diese abzuzählen,

und eine Steuereinrichtung (10), die einen Vergleich zwischen einer eine Zielspurposition kennzeichnenden Zielpositionsinformation und dem Zählwert der Zähleinrichtung durchführt und die Bewegung der Wiedergabeeinrichtung (3) durch die Bewegungsvorrichtung (4) anhält, wenn die Zielpositionsinformation und der Zählwert einander entsprechen,

**dadurch gekennzeichnet**,

daß die genannte Vorrichtung weiterhin aufweist:

eine Einrichtung (10) für die Erzeugung der Zielpositionsinformation zur Festlegung der Spurzahl [M] von einer laufenden Spurposition bis zu einer Zielspurposition auf der Basis der Anzahl der Spuren [n] in einer mit Hilfe der folgenden Gleichung berechneten Wiedergabezeit [$t_n$], um sie der Steuereinrichtung als die genannte Zielpositionsinformation zuzuführen:

$$t_n \doteq \frac{2\pi}{v_0} \sum_{i=1}^{n} (r_0 + i\,p)$$

worin [$v_0$] die Lineargeschwindigkeit, [p] den Spurabstand und [$r_0$] den Radius einer Referenzspur bedeuten, und [n] die Zahl angibt, wie oft die Wiedergabeeinrichtung die Informationsspuren von der genannten Referenzspur bis zu der genannten Wiedergabezeit [$t_n$] überquert,

und eine Geschwindigkeitssteuereinrichtung (20) zur Steuerung der Drehgeschwindigkeit der drehbaren Platte, wobei diese Geschwindigkeitssteuereinrichtung als Plattendrehgeschwindigkeitsinformation die Zeit [$\Delta t_n$] verwendet, die für eine Umdrehung der Platte in einer Zielspur benötigt wird und die mit Hilfe der folgenden Gleichung aus der Anzahl [n] der Spuren in der genannten Wiedergabezeit [$t_n$] berechnet wird:

$$\Delta t_n = \frac{2\pi}{V_0} (r_0 + np).$$

2. Gerät nach Anspruch 1, bei dem die Geschwindigkeitssteuereinrichtung (20) in Bezug auf eine Platte (1), die spiralförmige Informationsspuren mit einem Spurabstand [p] aufweist, als Plattendrehinformation die Zeit [$\Delta t_n$] verwendet, die für eine Umdrehung der Platte in einer Zielspur benötigt wird und mit Hilfe der folgenden Gleichung berechnet wird:

$$\Delta t_n = \frac{2\pi}{V_0} (r_0{}' + pn),$$

$(r_0' = r_0 + \pi\ p/2)$.

**3.** Gerät nach Anspruch 1, bei dem die genannte Steuereinrichtung (10) die Information über die Spurzahl [M] an die Bewegungsvorrichtung (4) und die genannte Zeit [$\Delta t_n$] als Information über die Zielgeschwindigkeit in einer Zielspur an die Geschwindigkeitssteuereinrichtung liefert, wenn die Spursteuerung der Signalwiedergabeeinrichtung deaktiviert ist.

**4.** Gerät nach Anspruch 3, bei dem die Geschwindigkeitssteuereinrichtung (20) aufweist:

eine Rahmensynchronisiersignal-Detektoreinrichtung (24) zur Detektierung eines aus der Signalwiedergabeeinrichtung kommenden Rahmensynchronisiersignals,
eine Rahmensynchronisiersignal-Generatoreinrichtung (25) zur Erzeugung eines Referenz-Rahmensynchronisiersignals, eine Phasenvergleichereinrichtung (26) zur Durchführung eines Phasenvergleichs zwischen den Ausgangssignalen der Rahmensynchronisiersignal-Detektoreinrichtung und der Referenz-Rahmensynchronisiersignal-Generatoreinrichtung
und eine Phasenkompensationseinrichtung (27) zur Ausgabe des Ausgangssignals der Phasenvergleichereinrichtung als Phasensteuersignal,
wobei die Spursteuerung der Signalwiedergabeeinrichtung von der Steuereinrichtung aktiviert wird, wenn die Information über die Nummer [M] der Zielspur mit einer vorbestimmten Zahl [$M_0$] von Spuren korrespondiert,
und wobei die Rahmensynchronisiersignal-Detektoreinrichtung (24) und die Referenz-Rahmensynchronisiersignal-Generatoreinrichtung (25) der Geschwindigkeitssteuereinrichtung mit Hilfe der Phasenvergleichereinrichtung (26) und der Phasenkompensationseinrichtung (27) die Drehphase der Platte steuern können.

**5.** Gerät nach Anspruch 4, bei dem die Geschwindigkeitssteuereinrichtung Schaltmittel (28) aufweist, die von der Steuereinrichtung (10) ein- und ausschaltbar sind, und bei dem in der Zeit, in der die Signalwiedergabeeinrichtung von der Bewegungsvorrichtung mit hoher Geschwindigkeit bewegt wird, das Ausgangssignal der Phasenkompensationseinrichtung (27) der Geschwindigkeitssteuereinrichtung (20) von den genannten Schaltmitteln unterbrochen wird.

## Revendications

**1.** Appareil d'enregistrement et reproduction sur disque ayant un dispositif de recherche de position de piste cible, comprenant des moyens de lecture de signaux (3) pour lire des signaux à partir de pistes d'informations enregistrées sur un disque (1) entraîné en rotation dans l'état où une vitesse linéaire est constante, des moyens de mouvement (4) pour déplacer lesdits moyens de lecture dans une direction traversant lesdites pistes d'informations sur ledit disque, des moyens formant compteur (10, 11) pour détecter, à partir d'un signal de sortie issu des moyens de lecture mobiles, combien de fois lesdits moyens de lecture traversent les pistes d'informations pour les compter, et des moyens de commande (10) pour faire une comparaison entre l'information de position cible indiquant une position de piste cible et une valeur de compte desdits moyens formant compteur pour arrêter le mouvement desdits moyens de lecture (3) produit par lesdits moyens de mouvement (4) lorsque ladite information de position cible et ladite valeur de compte sont en correspondance l'une avec l'autre,
caractérisé en ce que ledit dispositif comprend:

- des moyens générateurs d'information de position cible (10) pour déterminer le nombre de pistes M à partir d'une position de piste présente jusqu'à une position de piste cible sur la base du nombre de pistes n dans un temps de lecture $t_n$ calculé en utilisant l'équation suivante pour le fournir auxdits moyens de commande comme étant ladite information de position cible:

$$t_n \approx (2\ /V_0)\ \sum_{i=1}^{n}\ (r_0 + ip)$$

où une vitesse linéaire, un pas des pistes et le rayon d'une piste de référence sont représentés par $V_0$, p et $r_0$, respectivement, et le nombre de fois que lesdits moyens de lecture traversent les pistes d'informations jusqu'audit temps de lecture $t_n$ à partir de ladite piste de référence est représenté par n; et
- des moyens de commande de vitesse (20) pour commander la vitesse de rotation dudit disque tournant en utilisant comme information de vitesse du disque un temps $\blacktriangle t_n$ nécessaire pour effectuer une rotation du disque dans une piste cible calculée d'après le nombre de pistes n dans ledit temps de lecture $t_n$ en utilisant l'équation suivante:

$$\blacktriangle t_n = (2\,/V_o)\,(r_o + np).$$

2. Appareil selon la revendication 1, dans lequel, pour un disque (1) comportant des pistes spirales d'informations ayant un pas de piste p, lesdits moyens de commande de vitesse (20) commandent la vitesse de rotation dudit disque en utilisant comme information de rotation du disque, un temps $\blacktriangle t_n$ nécessaire pour effectuer une rotation du disque dans une piste cible calculé en utilisant l'équation suivante:

$$\blacktriangle t_n = (2\,/V_o)\,(r_o{'} + pn).$$

3. Appareil selon la revendication 1, dans lequel lesdits moyens de commande (10) sont opérants, ladite commande de suivi de piste desdits moyens de lecture de signaux étant relâchée, pour délivrer ladite information de nombre de pistes M auxdits moyens de mouvement (6), et pour délivrer comme information de vitesse cible dans une piste cible ledit temps $\blacktriangle t_n$ auxdits moyens de commande de vitesse.

4. Appareil selon la revendication 3, dans lequel lesdits moyens de commande de vitesse (20) comprennent des moyens de détection de signal de synchronisation de trames (24) pour détecter un signal de synchronisation de trames issu desdits moyens de lecture de signaux, des moyens générateurs de signal de synchronisation de trames de référence (25) pour produire un signal de synchronisation de trames de référence, des moyens de comparaison de phase (26) pour effectuer une comparaison de phase entre les signaux de sortie desdits moyens de détection de signal de synchronisation de trames et desdits moyens générateurs de signaux de synchronisation de trames de référence, et des moyens de compensation de phase (27) pour fournir le signal de sortie desdits moyens de comparaison de phase comme signal de commande de phase, dans lequel ladite information de numéro M de piste cible est en correspondance avec un nombre prédéterminé de pistes $M_o$, la commande de suivi de piste desdits moyens de lecture de signaux est déclenchée par lesdits moyens de commande, et dans lequel lesdits moyens de détection de signal de synchronisation de trames (24) et lesdits moyens générateurs de signal de synchronisation de trames de référence (25) desdits moyens de commande de vitesse sont autorisés à exécuter une commande de phase de rotation du disque par lesdits moyens de comparaison de phase (26) et lesdits moyens de compensation de phase (27).

5. Appareil selon la revendication 4, dans lequel lesdits moyens de commande de vitesse comprennent des moyens formant interrupteur (28) soumis à une commande "fermé/ouvert" par lesdits moyens de commande (10), et dans lequel, lors du déplacement desdits moyens de lecture de signaux à une grande vitesse par lesdits moyens de mouvement, un signal de sortie issu desdits moyens de compensation de phase (27) desdits moyens de commande de vitesse (20) est interrompu par lesdits moyens formant interrupteur.

**FIG.1**

**FIG.2**

**FIG.5**

**FIG.6**

**FIG.3**

EP 0 435 646 B1

FIG.4A

FIG.4B